# EUROPÄISCHE PATENTSCHRIFT

(11) **EP 2 601 395 B1**
(45) Veröffentlichungstag und Bekanntmachung des Hinweises auf die Patenterteilung: **31.12.2014**
(21) Anmeldenummer: 11769811.8
(22) Anmeldetag: 20.09.2011
(51) Int. Cl.: F02C 7/06, F02B 39/14, F16N 7/38, F16N 17/02, F16N 39/02

(54) **ÖLVERSORGUNGSSYSTEM FÜR EINE STATIONÄRE TURBOMASCHINE**
OIL SUPPLY SYSTEM FOR A STATIONARY TURBOMACHINE
SYSTÈME D'ALIMENTATION EN HUILE POUR UNE TURBOMACHINE FIXE

(30) Priorität: 22.09.2010 EP 10178310
(43) Veröffentlichungstag der Anmeldung: 12.06.2013
(73) Patentinhaber: Siemens Aktiengesellschaft, 80333 München (DE)
(72) Erfinder: EICKELKAMP, Jan, 46149 Oberhausen (DE); JÜTTNER, Christoph, 44135 Dortmund (DE); MALANGONE, Barbara, 45891 Gelsenkirchen (DE); RAUH, Horst Uwe, 45309 Essen (DE); HAHN, Jürgen, 44797 Bochum (DE); SIMON, Gerhard, 45239 Essen (DE)
(86) Internationale Anmeldenummer: PCT/EP2011/066282
(87) Internationale Veröffentlichungsnummer: WO 2012/038402

(56) Entgegenhaltungen:
- EP-A2- 1 298 298
- DE-A1- 4 304 482
- FR-A1- 2 621 562
- JP-A- 55 128 611
- US-A- 4 105 093
- US-A- 5 611 411
- US-A1- 2003 099 538

## Beschreibung

Die Erfindung betrifft ein Ölversorgungssystem für eine stationäre Turbomaschine, mit einem Öltank, zumindest einer Pumpe, einem Wärmetauscher zur Kühlung des Öls und einem diese Komponenten verbindenden Leitungssystem.

Die aus dem Stand der Technik bekannten Ölversorgungssysteme werden beispielsweise zur Schmierung der Radial- und Axiallager von Gasturbinen verwendet. In den Lagern der Gasturbine ist der Rotor der Gasturbine gelagert, der üblicherweise mit einer Drehzahl von 3000 min⁻¹ bzw. 3600 min⁻¹ während des Betriebs der Gasturbine rotiert. Ein an den Rotor angeschlossener Generator wandelt dann die der Gasturbine in fossilem Brennstoff zugeführte Energie in elektrische Energie um. Die Lager weisen dabei in der Regel ein Anhebeöl-System und ein Schmieröl-System auf. Das Anhebeöl wird im Radiallager benötigt, um den Start bzw. das Abfahren der Gasturbine durch hydrostatische Schmierung bei vergleichsweise geringer Drehzahl des Rotors zu ermöglichen, ohne dass Beschädigungen in den Lagern und am Rotor auftreten. Das Schmieröl-System dient zur Versorgung der Lager bei Nennbetrieb, also bei größeren Drehzahlen, die eine hydrodynamische Schmierung ermöglichen. Häufig weisen das Anhebeöl-System und das Schmieröl-System einen gemeinschaftlichen Öltank auf, in dem das von den Lagern zurückgeführte Öl gespeichert wird. Das nach der Nutzung im Öltank gespeicherte Öl weist aufgrund der Reibung, der es im Lager ausgesetzt ist und aufgrund der Umgebung, in der es eingesetzt ist, zumeist eine Temperatur von 80°C bis 90°C auf. Der Öltank ist in der Regel so dimensioniert, dass die zurück gespeiste Menge an Schmieröl darin so lange verweilen kann, dass die darin gelöste Luft in einem hinreichenden Umfang entweichen kann, bevor das Öl erneut dem Anhebeöl- bzw. Schmieröl-System zugeführt wird.

In der Zuführungsleitung des Schmieröl-System ist zudem ein Wärmetauscher vorgesehen, um das dem Öltank mit einer Temperatur von ca. 70°C entnommene Schmieröl auf eine Vorlauftemperatur von ca. 40°C - 50°C zu kühlen. Der Wärmetauscher ist beispielsweise als ein luftgekühlter oder wassergekühlter Wärmetauscher ausgebildet, der ggf. mit einem Kühlerventilator ausgestattet ist. Ein derartiges System ist beispielsweise aus der DE 43 04 482 A1 bekannt.

Nachteilig ist jedoch, dass bei sehr warmen Umgebungstemperaturen von etwa 50°C und in seltenen Fällen noch höher, eine Kühlung des Schmieröls auf 50°C, der maximal zulässigen Vorlauftemperatur, nicht mehr mit dem luftgekühlten Wärmetauscher gewährleistet werden kann und ein wassergekühlter Wärmetauscher bei reinen Gasturbinen-Kraftwerken in der Regel nicht verfügbar ist. In solchen Fällen kann die Vorlauftemperatur des Schmieröls auf einen Wert von 50°C (oder niedriger) nur dadurch abgesenkt werden, wenn zusätzlich zum luftgekühlten Wärmetauscher eine Kompressionskältemaschine in der Zuführungsleitung eingesetzt wird. Diese Umrüstung geht jedoch mit höheren Kosten einher und verschlechtert den Gesamtwirkungsgrad der Anlage durch den gestiegenen Eigenverbrauch aufgrund der Verwendung des Kompressors der Kältemaschine. Weiter gefährdet die Verwendung der zusätzlichen Komponente - der Kompressionskältemaschine - die Verfügbarkeit der Gasturbine. Eine weitere begrenzende Randbedingung ist zudem, dass die im Anhebeöl-Kreislauf vorgesehene Anhebeöl-Pumpe nicht mit einer Öltemperatur von 73°C oder höher betrieben werden darf. Dies liegt in der Tatsache begründet, dass ein Überschreiten der Öltemperatur zu einer zu niedrigen Viskosität des Öls (beispielsweise kleiner als 10 cSt) führt, was einen sicheren und zuverlässigen Betrieb der Anhebeöl-Pumpe nicht mehr gewährleistet. Zwar bestände die Möglichkeit, auch dafür geeignete Pumpen zu verwenden, jedoch sind diese in der Anschaffung deutlich teuerer.

Des Weiteren besteht bei Überschreiten der Öltemperatur von etwa 75°C die Gefahr, dass im Betrieb die Lager nicht mehr ausreichend gekühlt werden. Auch dies würde den sicheren Betrieb der Gasturbine gefährden.

Des Weiteren ist aus der US 4,105, 093 bekannt, bei Schmierölsystemenein druckbeaufschlagtes Reservoir zu verwenden. Dieses wird mittels einer Pumpe und einem Wärmetauscher mit gekühltem Hydraulikmittel versorgt. Nachteilig bei dieser Ausführungsform ist, dass die Pumpen im wärmeren Tankbereich angesiedelt sind, so dass auch dort die vorgenannten Probleme hinsichtlich der Viskosität auftreten können. Zudem offenbart US 5,611,411 ein ungekühltes Schmierölsystem für einen Turbinengenerator, dessen vertikal geteilter Tank über eine Klappe einen Schmiermittelausgleich ermöglicht.

Zudem ist aus der EP 1 298 298 A2 ein Ölversorgungssystem einer Mikroturbine bekannt, welches einen horizontal geteilten Öltank umfasst. Rückfließendes Öl wird in einem oberen Tankvolumen gesammelt, um es dort ausgasen zu lassen. Wenn das Öl im oberen Volumen eine bestimmte Füllhöhe überschreitet, öffnet ein schwimmerbetätgtes Ventil, wodurch Öl aus dem oberen Tankvolumen in das untere abfließen kann. Von dort aus wird das Öl erneut zur Versorgung der Gasturbine verwendet. Es hat sich jedoch herausgestellt, dass ein derart simples Ölversorungssystem nicht geeignet ist, um in Umgebungen mit höheren Temperaturen eingesetzt zu werden.

Aufgabe der Erfindung ist daher die Bereitstellung eines Ölversorgungssystems für eine stationäre Turbomaschine, die auch bei sehr warmen Umgebungstemperaturen zwischen 50°C und 70°C eine ausreichende Kühlung des Öls eines Ölversorgungssystems gewährleitstet, ohne dass leistungsfähigere Komponenten oder Komponenten mit höheren zulässigen Betriebstemperaturen erforderlich sind.

Die der Erfindung zugrundeliegende Aufgabe wird mit einem Ölversorgungssystem gemäß den Merkmalen des Anspruchs 1 gelöst. Vorteilhafte Ausgestaltungen des Ölversorgungsystems sind in den abhängigen Ansprüchen 2 bis 6 angegeben.

Es ist vorgesehen, dass das eingangs genannte Ölversorgungssystem einen Öltank mit zwei horizontal übereinander geschichteten Bereichen zur Speicherung des Öls aufweist, welche beiden Bereiche durch ein Trennelement größtenteils oder vollständig voneinander getrennt sind. Die räumliche Aufteilung geschieht, um Öl mit zwei unterschiedlichen Temperaturniveaus in übereinander liegenden Bereichen zu speichern. Gleichzeitig soll eine ungehinderte Vermischung von warmem und kühlem Öl weitestgehend oder vollständig vermieden werden. Dabei ist vorzugsweise vorgesehen, dass das durch die Schmierung erwärmte Schmieröl aus dem Rücklauf in den oberen Bereich des Öltanks zurückgeführt wird. Aufgrund der noch vergleichsweise hohen Temperatur und einer ausreichenden Verweilzeit des Schmieröls im oberen Bereich des Öltanks kann weiterhin die im rückgeführten Öl gelöste Luft entweichen. Das entlüftete Öl wird durch eine in einer Umwälz-Leitung vorgesehene Umwälz-Pumpe angesaugt und über einen in Reihe geschalteten luftgekühlten Wärmetauscher geleitet, in dem es auf eine Temperatur, die geringfügig über der Umgebungstemperatur liegt, abgekühlt wird. Somit wird das Öl schlechtestenfalls auf eine Temperatur von etwa 60 °C abgekühlt. Anschließend wird das abgekühlte Öl in den unteren Bereich des Öltanks eingespeist. Dort wird es gespeichert, um es für die beschriebenen Zwecke bereitzuhalten. Um sicherzustellen, dass die Anhebeöl-Pumpe immer mit ausreichend kaltem Öl versorgt werden kann, wird vorzugsweise der Anschluss der Anhebeöl-Leitung am Öltank in die Nähe des Mündungsbereichs der Umwälz-Leitung platziert. Sofern vorhanden, saugen eine Haupt-, eine Hilfs- und/oder eine Notschmierpumpe aus der unteren Temperaturzone des Öltanks Öl an.

Durch die Verlagerung des Wärmetauschers des Ölversorgungssystems in die Umwälz-Leitung, also vor die Anhebeöl- und Schmieröl-Pumpen, ist es möglich, die Vorlauftemperatur des Schmieröls in etwa auf die Umgebungstemperatur anzuheben, ohne dass gleichzeitig die maximale Ansaugtemperatur von 73°C zum Betrieb der Anhebeöl-Pumpe überschritten wird, da es höchst unwahrscheinlich ist, dass am Standort der Turbomaschine dauerhaft derartig hohe Umgebungstemperaturen auftreten. Durch das Anheben der Vorlauftemperatur und somit auch der Rücklauftemperatur, verglichen mit den Temperaturen beim Stand der Technik, kann selbst bei sehr hohen Umgebungstemperaturen-von etwa 60°C aufgrund der steigerbaren Kühlleistung (größere Temperaturabsenkung Δt) des Wärmetauschers, welche der luftgekühlte Wärmetauscher nunmehr in der Lage ist zu leisten, die aus dem Schmieröl eingetragene Wärme ohne eine zusätzliche Kompressionskältemaschine abgeführt werden.

Eine nicht ganz vollständige Trennung der beiden Bereiche gewährleistet, dass stets ausreichend Öl im unteren Bereich gespeichert wird und dieser somit bei einem Ausfall nicht leer laufen kann. Auch entsteht dadurch kein Unterdruck im unteren Bereich des Öltanks, wenn Öl von den Pumpen dem Öltank entnommen wird und gleichzeitig kein Öl von der Umwälz-Pumpe gefördert werden sollte.

Dagegen stellt eine vollständige Trennung der beiden Bereiche sicher, dass stets nur gekühltes Öl von den Ölkreisläufen angesaugt wird. Sofern erforderlich, kann in diesem Fall auch der untere Bereich des Öltanks eine eigene Entlüftung aufweisen.

Das Leitungssystem umfasst eine Umwälz-Leitung, in welcher eine Umwälz-Pumpe und der luftgekühlte Wärmetauscher vorgesehen sind und welche die beiden Bereiche des Öltanks außerhalb des Öltanks fluidleitend miteinander verbindet, derart, dass von der Umwälz-Pumpe Öl aus dem oberen Bereich des Öltanks in den unteren Bereich des Öltanks förderbar ist. Weiter umfasst das Leitungssystem eine Anhebeöl-Leitung, dessen erstes Ende zur Entnahme von Anhebeöl aus dem Öltank am unteren Bereich des Öltanks angeordnet ist, wobei in der Anhebeöl-Leitung eine Anhebeöl-Pumpe als eine der zumindest einen Pumpe vorgesehen ist.

Bevorzugt sind die an dem unteren Bereich mündenden Enden der Umwälz-Leitung und der Anhebeöl-Leitung an der gleichen Seite des Öltanks angeordnet. Gemäß einer weiteren vorteilhaften Ausgestaltung umfasst das Leitungssystem zumindest eine Schmieröl-Leitung, dessen erstes Ende jeweils zur Entnahme von Schmieröl aus dem Öltank am unteren Bereich des Öltanks angeordnet ist und in welcher jeweils eine Schmieröl-Pumpe als eine der zumindest einen Pumpe vorgesehen ist. Vorteilhafterweise weist das Leitungssystem als Rücklauf eine Ölrückführungs-Leitung zur Rückführung des Öls aus der Turbomaschine in den Öltank auf, welche im oberen Bereich des Öltanks mündet.

Weiter bevorzugt sind das am unteren Bereich mündende Ende der Anhebeöl-Leitung und die im oberen Bereich mündende Ölrückführungs-Leitung an einander gegenüberliegenden Seiten des Öltanks angeordnet. Ergänzend oder alternativ ist vorzugsweise vorgesehen, dass der im oberen Bereich angeordnete Anschluss der Umwälz-Leitung und die im oberen Bereich mündende Ölrückführungs-Leitung an einander gegenüberliegenden Seiten des Öltanks angeordnet. Mit anderen Worten: der Anschluss der dem Öltank wärmeres Öl zuführenden Leitung ist Strömungsrichtung des Öls innerhalb des Öltanks gesehen möglichst weit von den Anschlüssen der dem Öltank Anhebe-Öl entnehmenden Leitungen entfernt, um ein zu frühzeitiges Ansaugen und Wiederverwenden bzw. Bereitstellen von noch zu warmen und/oder noch zu lufthaltigem Öl zu verhindern.

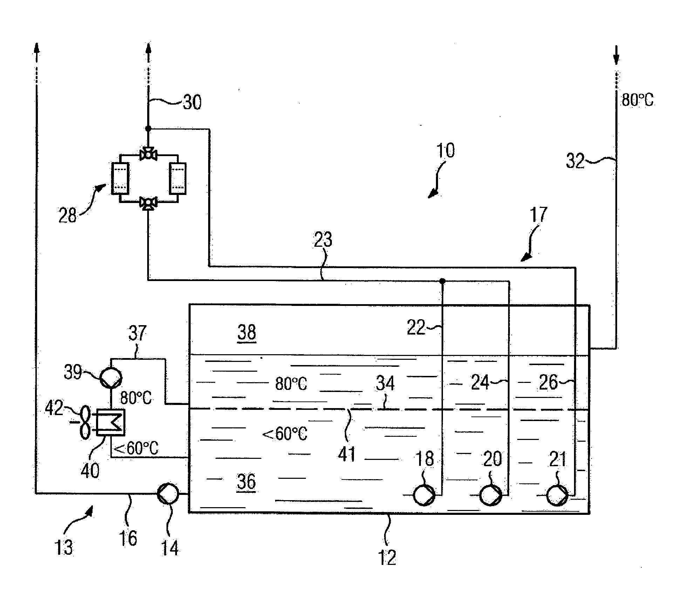

Weitere Vorteile und Merkmale der Erfindung werden anhand eines in der Figurenbeschreibung beschriebenen Ausführungsbeispiels näher erläutert. Es zeigt:
die einzige Figur in schematischer Darstellung ein Ölversorgungssystem einer stationären Turbomaschine.

Die einzige Figur zeigt in schematischer Darstellung ein Ölversorgungssystem 10 einer nicht weiter dargestellten stationären Turbomaschine. Vorzugsweise ist die Turbomaschine als stationäre Gasturbine ausgebildet. Das Ölversorgungssystem 10 umfasst einen Öltank 12 zur Speicherung des Öls, welches die Gasturbine zur Schmierung und zum Anheben des Rotors der Gasturbine in entsprechenden Lagern benötigt. Ferner umfasst das Ölversorgungssystem 10 ein Anhebeöl-System 13 mit einer Anhebeöl-Pumpe 14, welche in einer Anhebeöl-Leitung 16 angeordnet ist. Das stromabwärtige Ende der Anhebeöl-Leitung 16 mündet an den Lagern der Gasturbine, um diesen Anhebeöl bereitzustellen. Die Anhebeöl-Pumpe 14 ist dabei als Hochdruck-Pumpe ausgebildet.

Gemäß dem in der einzigen Figur gezeigten Ausführungsbeispiel umfasst ein Schmieröl-System 17 drei Schmieröl-Leitungen 22, 24, 26, in denen jeweils eine Pumpe 18, 20, 21 als Haupt-, Hilfs- und Not-Schmierpumpen angeordnet sind. Die Schmieröl-Leitungen 22, 24 verbinden sich zu einer gemeinsamen Schmieröl-Leitung 23, in der eine Ölfilteranlage 28 vorgesehen ist. Hinter der Ölfilteranlage 28 verbindet sich die Schmieröl-Leitung 23 und die Schmieröl-Leitung 26 zu einer weiteren Schmieröl-Leitung 30, deren stromabwärtiges Ende an den Lagern der Gasturbine mündet, um diesen Schmieröl zur Verfügung zu stellen.

Das von den Lagern zurückfließende Öls, sei es Anhebeöl oder sei es Schmieröl, wird über eine Ölrückführungs-Leitung 32 in den Öltank 12 zurückgeführt, wodurch sowohl das Anhebeöl-System 13 und das Schmieröl-System 17 einen geschlossenen Ölkreislauf aufweisen.

Der Öltank 12 ist mit einem Trennelement 34 ausgestattet. Das Trennelement 34 ist beispielsweise als im Öltank 12 horizontal verlaufendes Blech ausgestaltet und trennt den Öltank 12 in zwei horizontal übereinander liegende Bereiche 36, 38 auf. Der erste Bereich 36 liegt unterhalb des Trennelements 34 und der zweite Bereich 38 des Öltanks 12 liegt oberhalb des Trennelements 34. Der erste Bereich 36 wird auch als unterer Bereich und der zweite Bereich 38 als oberer Bereich bezeichnet.

Um den Einsatz eines größeren Öltanks 12 bzw. den Einsatz einer vergrößerten Menge an Öl zu vermeiden, ist es möglich, dass das Trennelement 34 als gelochtes Trennelement ausgestaltet ist. Die Löcher 41 des Trennelements, sind in ihrer Anzahl vergleichweise gering und in ihrem Durchmesser eher klein, so dass lediglich ein kleiner Anteil des im oberen Bereich 38 üblicherweise gespeicherten heißeren Öls durch die Löcher 41 in den unteren Bereich 36 des Öltanks 12 gelangen kann, was die Öl-Temperatur dort auf dem niedrigeren Niveau hält.

Die Ölrückführungs-Leitung 32 mündet dabei im oberen Bereich 38 des Öltanks 12. An der dem Ende der Ölrückführungs-Leitung 32 gegenüberliegenden Seite des Öltanks 12 ist eine Umwälz-Leitung 37 am oberen Bereich 38 angeschlossen. In dieser Umwälz-Leitung 37 sind eine Umwälz-Pumpe 39 sowie ein Wärmetauscher 40 in Reihe geschaltet. Die Umwälz-Leitung 37 mündet im unteren Bereich des Öltanks 12. Durch die Umwälz-Leitung 37 ist Öl aus dem oberen Bereich 38 des Öltanks 12 in den unteren Bereich 36 des Öltanks 12 förderbar.

Im stationären Betrieb der Gasturbine gelangt erwärmtes Öl, beispielsweise mit einer Temperatur von ca. 80°C, durch die Ölrückführungs-Leitung 32 in den oberen Bereich 38 des Öltanks 12. Im oberen Bereich 38 des Öltanks 12 wird somit vergleichsweise warmes Öl gespeichert. Aufgrund der noch vergleichsweise hohen Temperatur und der ausreichenden Verweilzeit kann die noch im Öl gelöste Luft entweichen. Danach wird das Öl aus dem oberen Bereich 38 über die Umwälz-Leitung 37 mit Hilfe der Umwälz-Pumpe 39 in den unteren Bereich 36 des Öltanks 12 gefördert werden. Gleichzeitig durchströmt das geförderte Öl den Wärmetauscher 40, der das Öl auf eine niedrigere Temperatur herabkühlt. Vorzugsweise handelt es sich bei dem Wärmetauscher 40 um einen luftgekühlten Wärmetauscher mit einem Kühlerventilator 42, wodurch dieser sich besonders effizient betreiben lässt. Mit Hilfe des luftgekühlten Wärmetauschers 40 wird das umgewälzte Öl in etwa auf die Umgebungstemperatur, oder geringfügig darüber, abgekühlt. Da an Standorten von stationären Gasturbinen über mehrere Stunden andauernde Umgebungstemperaturen von 55°C bereits sehr selten sind, kann prinzipiell ausgeschlossen werden, dass das Öl nach der Kühlung eine Temperatur von mehr als 60°C aufweist. Somit befindet sich im unteren Bereich 36 des Öltanks 12 stets Öl mit einer Temperatur von maximal 60°C.

Sowohl die Anhebeöl-Leitung 16 als auch die Schmieröl-Leitungen 22, 24, 26 sind fluidleitend an den unteren Bereich 36 angeschlossen. Damit ist gewährleistet, dass jede dieser Leitungen 16, 22, 24, 26 stets Öl ansaugt und jede Pumpe 14, 18, 20, 21 des Schmieröl-Systems 17 und des Anhebeöl-Systems 13 stets Öl zu den Lagern der Gasturbine fördert, dessen Temperatur maximal 60°C beträgt. Damit ist gewährleistet, dass auch die Anhebeöl-Pumpe 14 Öl mit einer Temperatur ansaugt, die weit unterhalb der kritischen Ansaugtemperatur von 73°C liegt. Dies vermeidet die Verwendung einer leistungsstärkeren Anhebeöl-Pumpe bzw. die Verwendung einer Anhebeöl-Pumpe mit einer höheren zulässigen Betriebstemperatur als 73°C, ab der die Viskosität zum Betrieb der Pumpe zu klein werden kann.

Weiterer Vorteil der Erfindung ist, dass für die Regelung der Schmieröl-Vorlauftemperatur in den Schmieröl-Leitungen 22, 23, 24, 26, 30 keine Bypassschaltung mehr benötigt wird. Die Regelung erfolgt beispielsweise durch Absenkung bzw. Erhöhen des Fördervolumens der Umwälz-Pumpe 39 oder durch Drehzahlregulierung der Kühlerventilatoren 42.

## Patentansprüche

1. Ölversorgungssystem (10) für eine stationäre Turbomaschine,
mit einem Öltank (12), zumindest einer Pumpe (14, 18, 20, 21), einem Wärmetauscher (40) zur Kühlung des Öls und einem Leitungssystem,
wobei der Öltank (12) zwei horizontal übereinander geschichtete Bereiche (36, 38) zur Speicherung des Öls aufweist, welche beiden Bereiche (36, 38) durch ein Trennelement (34) größtenteils oder vollständig voneinander getrennt sind,
**dadurch gekennzeichnet**
**dass** das Leitungssystem eine Umwälz-Leitung (37) umfasst, in welcher der Wärmetauscher (40) und eine Umwälz-Pumpe (39) vorgesehen sind und welche die beiden Bereiche (36, 38) fluidleitend miteinander verbindet, derart, dass von der Umwälz-Pumpe (39) Öl aus dem oberen Bereich (38) des Öltanks (12) in den unteren Bereich (36) förderbar ist und dass das Leitungssystem eine Anhebeöl-Leitung (16) umfasst, deren erstes Ende zur Entnahme von Anhebeöl am unteren Bereich (36) des Öltanks (12) angeordnet ist, wobei in der Anhebeöl-Leitung (16) eine Anhebeöl-Pumpe (14) als eine der zumindest einen Pumpe vorgesehen ist.

2. Ölversorgungssystem (10) nach Anspruch 1,
bei dem die an dem unteren Bereich (36) mündenden Enden der Umwälz-Leitung (37) und der Anhebeöl-Leitung (16) an der gleichen Seite des Öltanks (12) angeordnet sind.

3. Ölversorgungssystem (10) nach einem der Ansprüche 1 oder 2,
bei dem das Leitungssystem zumindest eine Schmieröl-Leitung (22, 24, 26) umfasst,
dessen erstes Ende jeweils zur Entnahme von Schmieröl am unteren Bereich (36) des Öltanks (12) angeordnet ist und in welcher jeweils eine Schmieröl-Pumpe (18, 20, 21) als eine der zumindest einen Pumpe vorgesehen ist.

4. Ölversorgungssystem (10) nach einem der vorangehenden Ansprüche,
bei dem das Leitungssystem als Rücklauf eine Ölrückführungs-Leitung (32) zur Rückführung des Öls in den Öltank (12) aufweist, welche im oberen Bereich (38) des Öltanks (12) mündet.

5. Ölssystem nach Anspruch 4,
bei dem
das am unteren Bereich (36) mündende Ende der Anhebeöl-Leitung (16) und/oder der im oberen Bereich angeordnete Anschluss der Umwälz-Leitung (37) und
das im oberen Bereich (38) mündende Ende der Ölrückführungs-Leitung (32) an einander gegenüberliegenden Seiten des Öltanks (12) angeordnet sind.

6. Stationäre Gasturbine mit einem Ölversorgungssystem (10) nach einem der Ansprüche 1 bis 5.

## Claims

1. Oil supply system (10) for a stationary turbomachine, having an oil tank (12), at least one pump (14, 18, 20, 21), a heat exchanger (40) for cooling the oil, and a conduit system,
wherein the oil tank (12) has two regions (36, 38) stacked horizontally one above the other for storing the oil, said two regions (36, 38) being largely or completely separated from each other by a separating element (34), **characterized in**
**that** the conduit system comprises a circulation conduit (37), in which the heat exchanger (40) and a circulating pump (39) are provided and which connects the two regions (36, 38) to one another in a manner which allows fluid transfer, such that oil can be pumped out of the upper region (38) of the oil tank (12) into the lower region (36) by the circulating pump (39), and that the conduit system comprises a lift oil conduit (16), the first end of which is arranged for removal of lift oil in the lower region (36) of the oil tank (12), wherein a lift oil pump (14) is provided in the lift oil conduit (16) as one of the at least one pumps.

2. Oil supply system (10) according to Claim 1,
in which the ends of the circulation conduit (37) and of the lift oil conduit (16) which open into the lower region (36) are arranged on the same side of the oil tank (12).

3. Oil supply system (10) according to either of Claims 1 and 2,
in which the conduit system comprises at least one lubricating oil conduit (22, 24, 26),
the respective first ends of which are arranged in the lower region (36) of the oil tank (12) to enable lubricating oil to be removed, and in each of which a lubricating oil pump (18, 20, 21) is provided as one of the at least one pumps.

4. Oil supply system (10) according to one of the preceding claims,
in which the conduit system has an oil return conduit (32) as a return for returning the oil to the oil tank (12), said conduit opening into the upper region (38) of the oil tank (12).

5. Oil system according to Claim 4,
in which
that end of the lift oil conduit (16) which opens into the lower region (36), and/or the connection, arranged in the upper region, of the circulation conduit (37) and that end of the oil return conduit (32) which opens in the upper region (38) are arranged on opposite sides of the oil tank (12).

6. Stationary gas turbine having an oil supply system (10) according to one of Claims 1 to 5.

## Revendications

1. Système (10) d'alimentation en huile pour une turbomachine fixe,
comprenant une cuve (12) à huile, au moins une pompe (14, 18, 20, 21), un échangeur de chaleur (40) pour le refroidissement de l'huile et un système de canalisation, dans lequel la cuve (12) à huile a deux parties (36, 38) superposées horizontalement pour accumuler de l'huile, ces deux parties (36, 38) étant séparées, pour la plus grande partie ou complètement, par un élément (34) de séparation, **caractérisé**
**en ce que** le système de canalisation comprend un conduit (37) de recirculation, dans lequel sont prévus l'échangeur de chaleur (40) et une pompe (39) de recirculation et qui met en communication fluidique les deux parties (36, 38), de manière à ce que de l'huile puisse être véhiculée par la pompe (39) de recirculation de la partie (38) supérieure du réservoir (12) à l'huile dans la partie (36) inférieure et
**en ce que** le système de canalisation comprend un conduit (16) de relevage d'huile, dont la première extrémité est, pour prélever de l'huile à relever, disposée à la partie (36) inférieure du réservoir (12) à huile, une pompe (14) de relevage d'huile étant prévue comme l'une des au moins une pompe dans le conduit (16) de relevage d'huile.

2. Système (10) d'alimentation en huile suivant la revendication 1,
dans lequel les extrémités, débouchant dans la partie (36) inférieure, du conduit (37) de recirculation et du conduit (16) de relevage d'huile, sont disposées du même côté du réservoir (12) à huile.

3. Système (10) d'alimentation en huile suivant l'une des revendications 1 ou 2,
le système de canalisation comprend au moins un conduit (22, 24, 26) d'huile de lubrification,
dont la première partie est disposée, respectivement pour le prélèvement d'huile de lubrification, à la partie (36) inférieure du réservoir (12) à huile et dans lequel est prévue respectivement une pompe (18, 20, 21) d'huile de lubrification comme l'une des au moins une pompe.

4. Système (10) d'alimentation en huile suivant l'une des revendications précédentes,
dans lequel le système de canalisation a comme retour un conduit (32) de retour d'huile pour retourner l'huile dans le réservoir (12) à huile, conduit qui débouche dans la partie (38) supérieure du réservoir (12) à huile.

5. Système (10) d'alimentation en huile suivant la revendication 4,
dans lequel
l'extrémité, débouchant dans la partie (36) inférieure, du conduit (16) de relevage d'huile et/ou le raccord, disposé dans la partie supérieure, du conduit (37) de recirculation et l'extrémité, débouchant dans la partie (38) supérieure, du conduit (32) de retour d'huile sont disposées sur des côtés opposés du réservoir (12) à huile.

6. Turbine à gaz fixe ayant un système (10) d'alimentation en huile suivant l'une des revendications 1 à 5.
